# EUROPÄISCHE PATENTSCHRIFT

(11) **EP 1 553 663 B1**
(45) Veröffentlichungstag und Bekanntmachung des Hinweises auf die Patenterteilung: **11.07.2012**
(21) Anmeldenummer: 05000183.3
(22) Anmeldetag: 07.01.2005
(51) Int. Cl.: H01R 12/00, G06K 7/00

(54) **Kontaktiereinheit für ein kartenförmiges Trägerelement elektronischer Baugruppen**
Contact unit for card-shaped carriers with electronic components
Unité de contact pour supports de composants électroniques en forme de carte

(30) Priorität: 09.01.2004 DE 202004000179 U
(43) Veröffentlichungstag der Anmeldung: 13.07.2005
(73) Patentinhaber: STOCKO Contact GmbH & Co. KG, 42327 Wuppertal (DE)
(72) Erfinder: Klatt, Dieter, 42489 Wülfrath (DE)
(74) Vertreter: Stenger, Watzke & Ring

(56) Entgegenhaltungen:
- DE-U1- 29 811 425

## Beschreibung

Die vorliegende Erfindung betrifft eine Kontaktiereinheit für ein kartenförmiges Trägerelement elektronischer Baugruppen, mit einem Gehäuse, welches an einem stirnseitigen Ende ein Anschlussfeld, einen an dem dem Anschlussfeld gegenüberliegenden stirnseitigen Ende mündenden schlitzartigen Einschubkanal, in den das kartenförmige Trägerelement, insbesondere eine Chipkarte nach ISO 7816, einschiebbar ist, und eine parallel zum Einschubkanal im Gehäuse angeordnete, elektrisch mit dem Anschlussfeld verbundene Leiterplatte, welche an einer Oberfläche mit Kontaktelementen für eine Kontaktierung des kartenförmigen Trägerelements ausgerüstet ist, aufweist.

Kontaktiereinheiten für kartenförmige Trägerelemente elektronischer Bauelemente nach der sogenannten PCMCIA-Norm sind im Stand der Technik in zahlreichen Ausgestaltungen bekannt, beispielsweise aus der DE 295 05 678 U1 oder der DE 298 11 425 U1. Derartige Kontaktiereinheiten für kartenförmige Trägerelemente elektronischer Bauelemente, insbesondere eine Chipkarte nach ISO 7816, sind im Rahmen zunehmender Mobilität im Bereich der Computertechnologie im Hinblick auf Variabilität und Transportabilität immer öfter eingesetzt. Dabei sind die Kontaktiereinheiten in einem Aufnahmeschacht einer entsprechende Kontaktiereinheiten nutzenden Einrichtung, beispielsweise einem Notebook, Laptop oder dergleichen, einschiebbar bzw. einsteckbar. In dem Aufnahmeschacht der Einrichtung ist ein mit dem an einem stirnseitigen Ende des Gehäuses der Kontaktiereinheit vorhandenen Anschlussfeld zusammenwirkender Steckplatz, in der Regel nach PCMCIA-Norm, vorhanden, welcher eine mechanische und elektrische Kontaktierung bewirkt.

Ferner ist die PCMCIA-ExpressCard-Norm ― eine Weiterentwicklung der PCMCIA-Norm ― bekannt, welche Module mit zwei unterschiedlichen Formaten aufweist. Die Dicke der derartiger ExpressCard-Module beträgt 5 mm, die Länge 75 mm und die Breite je nach Typ entweder 34 mm oder 54 mm. ExpressCard-Module sind damit hinsichtlich ihrer Abmessungen kompakter als bisher bekannte PCMCIA-Module.

Die bisher bekannten Kontaktiereinheiten sind insbesondere aufgrund des bauformbedingten höheren Materialeinsatzes nur mit verhältnismäßig großem wirtschaftlichen Aufwand herstellbar und nur beschränkt für eine kostengünstige Massenproduktion im Sinne einer umfangreichen Verwendung vorbekannter kartenförmiger Trägerelemente geeignet. Ferner ist die Handhabbarkeit der bisher bekannten Kontaktiereinheiten bauformbedingt, insbesondere aufgrund der größeren Abmessungen, im Hinblick auf Variabilität und Transportabilität verbesserungsbedürftig.

Der Erfindung liegt in Anbetracht dieses Standes der Technik die **Aufgabe** zugrunde, eine gattungsgemäße Kontaktiereinheit für ein kartenförmiges Trägerelement elektronischer Baugruppen bereitzustellen, welche mit geringem wirtschaftlichen Aufwand, insbesondere unter Gesichtspunkten einer Massenproduktion, herstellbar und einfach und sicher verwendbar ist.

Die Aufgabe ist erfindungsgemäß durch eine Kontaktiereinheit gemäß Anspruch 1 **gelöst**.

Durch die Ausbildung der Kontaktiereinheit nach der PCMCIA-ExpressCard-Norm ist aufgrund der kleineren Abmessungen der Kontaktiereinheit sowohl die Handhabbarkeit derselben, insbesondere im Hinblick auf Variabilität und Transportabilität, als auch die Wirtschaftlichkeit derselben, insbesondere aufgrund des geringeren Materialeinsatzes und geringerem Verpackungs- und Transportaufwand, verbessert.

Die stirnseitige Breite des Gehäuses bzw. die stirnseitige Breite des Einschubkanals ist geringer als die Breite des kartenförmigen Trägerelements. In einer vorteilhaften Ausgestaltung der Erfindung weist das Gehäuse eine Basisplatte und eine Abdeckplatte auf, zwischen denen der an einer Stirnseite des Gehäuses mündende schlitzartige Einschubkanal für die Aufnahme des kartenförmigen Trägerelements ausgebildet ist, wobei die stirnseitige Breite der Basisplatte des Gehäuses und/oder die stirnseitige Breite der Abdeckplatte des Gehäuses geringer als die Breite des kartenförmigen Trägerelements ist. Erfindungsgemäß sind so kartenförmige Trägerelemente, insbesondere Chipkarten nach ISO 7816, welche eine Breite von etwa 54 mm aufweisen, in einer Kontaktiereinheit mit einer geringeren Breite, vorzugsweise einer Kontaktiereinheit mit einer der PCMCIA-ExpressCard/34-Norm entsprechenden stirnseitigen Breite von 34 mm verwendbar.

Der Einschubkanal ist über seine gesamte Länge in Einschubrichtung des kartenförmigen Trägerelements zumindest einseitig, vorzugsweise beidseitig, durchgehend offen. Eine weitere Ausgestaltung der Erfindung sieht vor, dass die Basisplatte und die Abdeckplatte des Gehäuses ausschließlich im sich in Einschubrichtung des kartenförmigen Trägerelements in den Einschubkanal anschließenden Bereich fest miteinander verbunden sind. In einer bevorzugten Ausgestaltung der Erfindung stellt die Verbindung von Basisplatte und Abdeckplatte des Gehäuses im sich in Einschubrichtung des kartenförmigen Trägerelements in den Einschubkanal anschließenden Bereich zugleich eine Schwenkachse dar, bezüglich der die Basisplatte und/oder die Abdeckplatte des Gehäuses in einem geringen Maße relativ zueinander derart verschwenkbar sind, dass die Höhe des Einschubkanals gegen die Wirkung einer Rückstellkraft veränderbar ist. Dadurch wird das kartenförmige Trägerelement beim Einschieben in den Einschubkanal vorteilhafterweise klemmend gehalten. Vorteilhafterweise verringert sich die Höhe des Einschubkanals mit zunehmendem Abstand von der Verbindung bei entferntem kartenförmigen Trägerelement verringert. Beim Einschieben des kartenförmigen Trägerelementes in den Einschubkanal der Kontaktiereinheit wird dieser dann aufgeweitet und das kartenförmige Trägerelement aufgrund der damit einhergehenden elastischen Rückverformung sicher im Einschubkanal gehalten. Zugleich sind auf diese Weise eine hohe Formstabilität der Kontaktiereinheit und eine Kompensation fertigungsbedingter Toleranzen erzielbar. Die Abdeckplatte kann kürzer und/oder schmaler als die Basisplatte ausgebildet sein. In einer weiteren Ausgestaltung der Erfindung sind die Basisplatte und die Abdeckplatte des Gehäuses deckungsgleich.

In einer weiteren Ausgestaltung der Erfindung weisen die Kontaktelemente der Leiterplatte in Richtung der Abdeckplatte des Gehäuses bzw. sind auf der der Abdeckplatte zugewandten Oberfläche der Leiterplatte angeordnet.

Vorteilhafterweise weist zumindest die Basisplatte des Gehäuses einen lippenartigen Ansatz auf, durch welchen die Länge der Kontaktiereinheit über das PCMCIA-ExpressCard-Format hinaus verlängert ist. Der lippenartige Ansatz kann beispielsweise als Einschubführung für das in den Einschubkanal der Kontaktiereinheit einschiebbare kartenförmige Trägerelement dienen und auch die Handhabung der Kontaktiereinheit beim Einsetzen bzw. Entnehmen derselben in bzw. aus einem für diese vorgesehenen Aufnahmeschacht seitens einer eine entsprechende Kontaktiereinheit nutzenden Einrichtung, insbesondere einem Notebook, Laptop oder dergleichen, weiter verbessern.

In einer weiteren vorteilhaften Ausgestaltung der Erfindung weisen die Basisplatte des Gehäuses und die Leiterplatte eine Verlängerung auf, welche sich bei Einsatz der Kontaktiereinheit in einen dafür vorgesehenen Aufnahmeschacht außerhalb des vorzugsweise im PCMCIA-Format ausgebildeten Aufnahmeschachtes befindet. In einer besonders vorteilhaften Ausgestaltung der Erfindung sind in der Verlängerung elektronische Bauteile, vorzugsweise Sensorikelemente und/oder Antennen und/oder optische Anzeigeelemente, installiert, beispielsweise biometrische Sensorikelemente zur Erfassung von biometrischen Daten wie Fingerabdrücken oder dergleichen, so dass die erfindungsgemäße Kontaktiereinheit als Sicherungseinrichtung für eine Zugangsberechtigung oder dergleichen verwendbar ist.

Weitere Einzelheiten, Merkmale und Vorteile der Erfindung werden nachfolgend anhand der in den Figuren dargestellten Ausführungsbeispiele näher erläutert. Dabei zeigen:
- Fig. 1: in einer schematisch perspektivischen Darstellung eine erfindungsgemäße Kontaktiereinheit;
- Fig. 2: in einer schematisch perspektivischen Darstellung die Kontaktiereinheit nach Fig. 1 mit kartenförmigem Trägerelement und Aufnahmeschacht im nicht eingeschobenen Zustand bei nicht eingeschobenem kartenförmigen Trägerelement;
- Fig. 3: in einer schematisch perspektivischen Darstellung die Kontaktiereinheit nach Fig. 1 mit kartenförmigem Trägerelement und Aufnahmeschacht im eingeschobenen Zustand bei nicht eingeschobenem kartenförmigen Trägerelement und
- Fig. 4: in einer schematisch perspektivischen Darstellung die Kontaktiereinheit nach Fig. 1 mit kartenförmigem Trägerelement und Aufnahmeschacht im eingeschobenen Zustand bei eingeschobenem kartenförmigen Trägerelement.

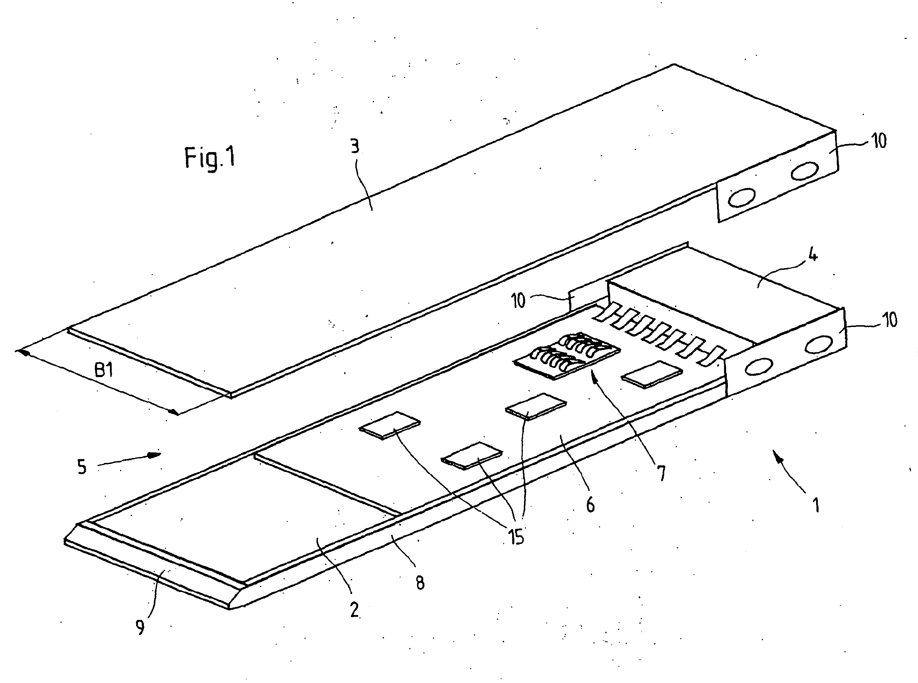

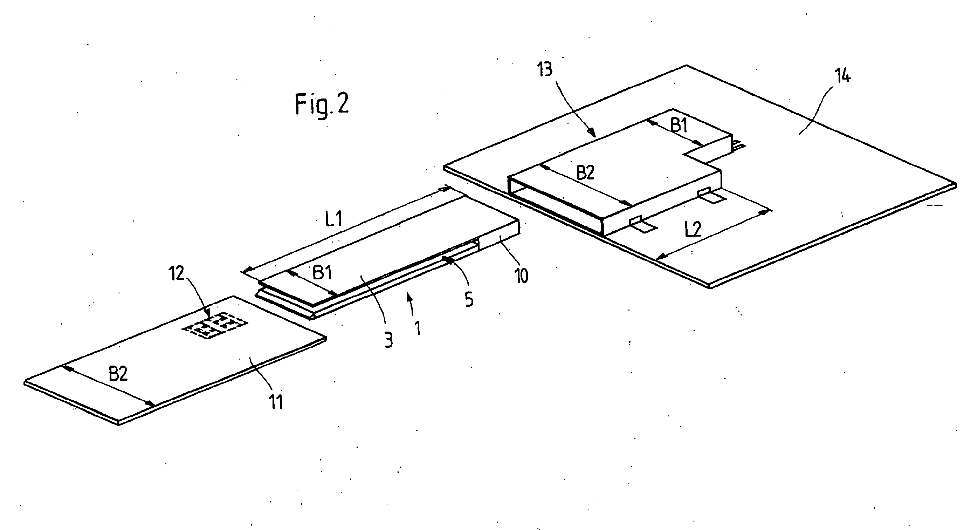

Das in Fig. 1 dargestellte Ausführungsbeispiel der Erfindung zeigt eine als Chipkartenleser ausgebildete Kontaktiereinheit 1, die vorgesehen ist, über eine normgemäße PCMCIA-ExpressCard-Schnittstelle mit einem in den Fig. 2 bis 4 exemplarisch mit 14 gekennzeichneten Notebook als die Kontaktiereinheit 1 nutzende Einrichtung kontaktiert zu werden. Die Kontaktiereinheit 1 besteht aus einem Gehäuse mit einer Basisplatte 2, einem PCMCIA-ExpressCard-Anschlussfeld 4 in Form einer Steckverbinderleiste mit Anschlusspolen an dem in Einschubrichtung in das Notebook 14 vorderen, in Fig. 1 rechts gelegenen Ende, einer Einschubführung 9 am gegenüberliegenden Ende für die Einführung einer Chipkarte 11 nach ISO 7816 als kartenförmiges Trägerelement und einer parallel mit Abstand zur Basisplatte 2 sich erstreckenden Abdeckplatte 3, welche mit der Basisplatte 2 im Bereich des Anschlussfeldes 4 über Verbindungslaschen 10 der Basisplatte 2 und des Abdeckelementes 3 starr verbunden ist, wozu die Verbindungslaschen 10 der Basisplatte 2 und der Abdeckplatte 3 vorliegend miteinander verschweißt sind. Dabei sind die Basisplatte 2 und die Abdeckplatte 3 des Gehäuses ausschließlich im sich in Einschubrichtung des kartenförmigen Trägerelements 11 in den Einschubkanal 5 anschließenden Bereich fest miteinander verbunden. Die Verbindung von Basisplatte 2 und Abdeckplatte 3 des Gehäuses im sich in Einschubrichtung des kartenförmigen Trägerelements 11 in den Einschubkanal 5 anschließenden Bereich stellt zugleich eine Schwenkachse dar, bezüglich der die Basisplatte 2 und/oder die Abdeckplatte 3 des Gehäuses in einem geringen Maße relativ zueinander derart verschwenkbar sind, dass die Höhe des Einschubkanals 5 gegen die Wirkung einer Rückstellkraft veränderbar ist. Dabei verringert sich die Höhe des Einschubkanals 5 mit zunehmendem Abstand von der Verbindung bei entferntem kartenförmigen Trägerelement 11.

Die genannten Bauteile der Kontaktiereinheit 1 werden von einem Kunststoffrahmen 8 getragen, der darüber hinaus eine Kontaktelemente 7 zum Kontaktieren des kartenförmigen Trägerelements 11 und weitere elektronische Bauteile 15 aufweisende Leiterplatte 6 mit Abstand parallel zur Abdeckplatte 3 derart hält, dass zwischen Leiterplatte 6 und Abdeckplatte 3 ein Einschubkanal 5 für das kartenförmige Trägerelement 11 gebildet wird, welches sich über einen an der dem Anschlussfeld gegenüberliegenden, in Fig. 1 links gelegenen Stirnseite mündenden Einschubschlitz und die Einschubführung 9 in die Kontaktiereinheit 1 einschieben und aus dieser wieder herausziehen lässt. Dabei lässt sich über die an der Oberfläche des kartenförmigen Trägerelements 11 angeordneten Kontaktelemente 12 und die auf der Leiterplatte 6 korrespondierend auf der der Abdeckplatte 3 zugewandten Oberfläche der Leiterplatte 6 angeordneten Kontaktelemente 7 eine Kontaktierung vornehmen, welche eine Verarbeitung des kartenförmigen Trägerelements 11 über die Kontaktiereinheit 1 seitens des Notebooks 14 ermöglicht, wenn die Kontaktiereinheit 1 in dem für diese vorgesehenen Aufnahmeschacht 13 des Notebooks 14 eingesetzt und mit dessen Schnittstelle über das Anschlussfeld 4 verbunden ist.

Das steckkartenförmige Gehäuse der Kontaktiereinheit 1 weist stirnseitig eine der Steckbreite der PCMCIA-ExpressCard-Norm entsprechende Breite B1 von 34 mm auf und eine Länge L1 von mindestens 75 mm auf. Damit ist die stirnseitige Breite B1 der Kontaktiereinheit 1 geringer als die stirnseitige Breite B2 des in den Einschubkanal 5 der Kontaktiereinheit 1 zum Kontaktieren einschiebbaren kartenförmigen Trägerelements 11, welches vorliegend als ISO 7816 Chipkarte eine stirnseitige Breite B2 von etwa 54 mm aufweist.

Die Fig. 2 bis 4 zeigen wie die Kontaktiereinheit 1 in den für diese vorgesehenen Aufnahmeschacht 13 seitens des Notebooks 14 und das kartenförmige Trägerelement 11 in den Einschubkanal 5 der Kontaktiereinheit 1 einschiebbar sind.

Fig. 2 zeigt das kartenförmige Trägerelement 11 vor dem Einschubschlitz des Einschubkanals 5 der Kontaktiereinheit 1, welche sich vor dem Aufnahmeschacht 13 des Notebooks 14 befindet. Der Aufnahmeschacht 13 des Notebooks 14 ist nach der PCMCIA-ExpressCard-Norm ausgestaltet und weist vorliegend einen schmalen, längeren, in den Fig. 2 bis 4 in Einschubrichtung links dargestellten Schacht zur Aufnahme von PCMCIA-ExpressCard-Modulen mit einer Steckbreite von 34 mm und davon abgesetzt einen breiteren, die Länge L2, welche geringer als die Länge L1 ist, aufweisenden, in den Fig. 2 bis 4 in Einschubrichtung rechts dargestellten Schacht zur Aufnahme von PCMCIA-ExpressCard-Modulen mit einer Steckbreite von 54 mm auf. In den Aufnahmeschacht 13 können somit entweder PCMCIA-ExpressCard-Modulen mit einer Steckbreite von 34 mm oder PCMCIA-ExpressCard-Modulen mit einer Steckbreite von 54 mm eingesetzt werden.

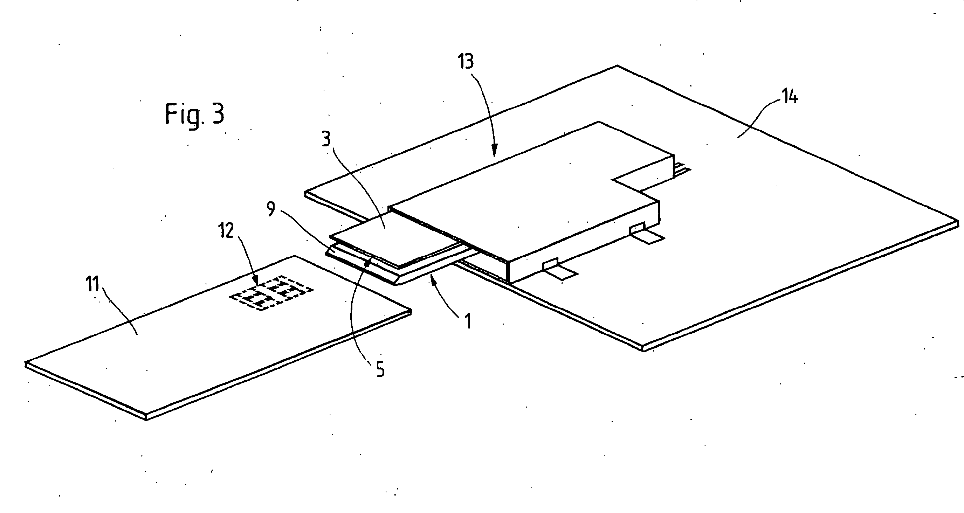

Fig. 3 zeigt die in dem schmalen, längeren, in den Fig. 2 bis 4 in Einschubrichtung links dargestellten Schacht des Aufnahmeschachtes 13 zur Aufnahme von PCMCIA-ExpressCard-Modulen eingesetzte Kontaktiereinheit 1 mit noch nicht in diese eingeschobenem kartenförmigen Trägerelement 11. Wie anhand von Fig. 3 zu erkennen ist, ist die Länge L1 der Kontaktiereinheit 1 vorliegend länger als 75 mm, so dass die Kontaktiereinheit 1 aus dem Aufnahmeschacht 13 des Notebooks 14 herausragt. Diese aus dem Aufnahmeschacht 13 des Notebooks 14 herausragende Verlängerung der Kontaktiereinheit 1 verbessert die Handhabbarkeit hinsichtlich Einsetzen und Entnehmen der Kontaktiereinheit 1 in bzw. aus dem Aufnahmeschacht 13 und ermöglicht darüber hinaus die Installation von weiteren elektronischen Bauteilen im Bereich der Verlängerung der Kontaktiereinheit 1, beispielsweise die Installation von biometrischen Sensorikelementen.

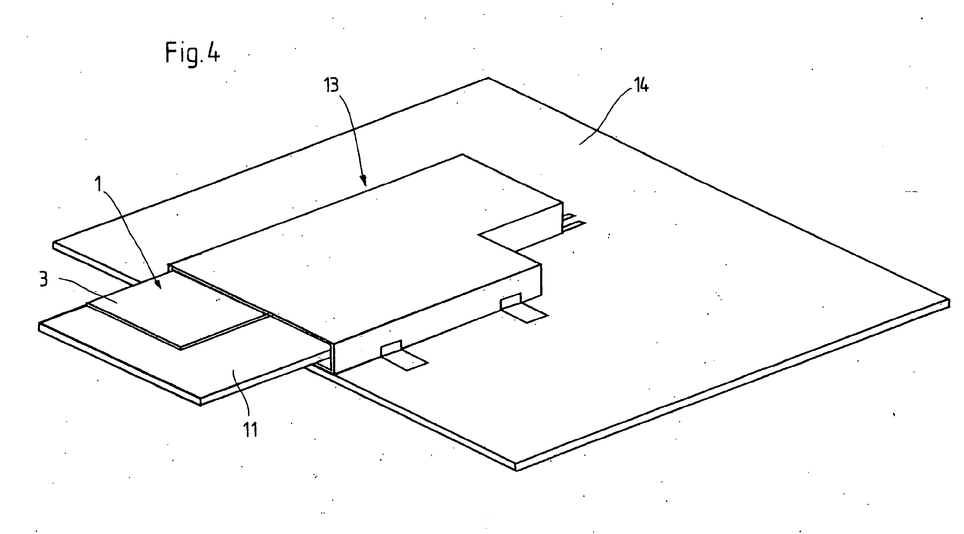

Fig. 4 zeigt die in dem schmalen, längeren, in den Fig. 2 bis 4 in Einschubrichtung links dargestellten Schacht des Aufnahmeschachtes 13 zur Aufnahme von PCMCIA-ExpressCard-Modulen eingesetzte Kontaktiereinheit 1 mit in diese eingeschobenem kartenförmigen Trägerelement 11.

Die in den Figuren dargestellten Ausführungsbeispiele der Erfindung dienen lediglich der Erläuterung der Erfindung und sind für diese nicht beschränkend.

### Bezugszeichenliste

- 1: Kontaktiereinheit
- 2: Basisplatte
- 3: Abdeckplatte
- 4: Anschlussfeld
- 5: Einschubkanal
- 6: Leiterplatte
- 7: Kontaktelemente (Leiterplatte (6))
- 8: Rahmen
- 9: Einschubbereich/Einschubführung
- 10: Verbindungslasche
- 11: kartenförmiges Trägerelement/Chipkarte
- 12: Kontaktelemente (kartenförmiges Trägerelement/Chipkarte (11))
- 13: Aufnahmeschacht (Kontaktiereinheit (1 ))
- 14: Kontaktiereinheit (1) nutzende Einrichtung/Notebook
- 15: elektronische Bauteile
- B1: Breite Kontaktiereinheit (1)/Basisplatte (2)/Abdeckplatte (3)/Einschubkanal (5)
- B2: Breite kartenförmiges Trägerelement/Chipkarte (11)
- L1: Länge Kontaktiereinheit (1)
- L2: Länge kurzer Teil Aufnahmeschacht (13)

## Patentansprüche

1. Kontaktiereinheit (1) für eine Chipkarte nach ISO 7816 mit einem Gehäuse, welches an einem stirnseitigen Ende ein Anschlussfeld (4), einen an dem dem Anschlussfeld (4) gegenüberliegenden stirnseitigen Ende mündenden schlitzartigen Einschubkanal (5), in den die Chipkarte nach ISO 7816 einschiebbar ist, und eine parallel zum Einschubkanal (5) im Gehäuse angeordnete, elektrisch mit dem Anschlussfeld (4) verbundene Leiterplatte (6), welche an einer Oberfläche mit Kontaktelementen (7) für eine Kontaktierung des kartenförmigen Trägerelements (11) ausgerüstet ist, aufweist,
**dadurch gekennzeichnet,**
**dass** die Kontaktiereinheit nach der PCMCIA-ExpressCard-Norm ausgebildet ist, wobei die stirnseitige Breite (B1) des Gehäuses bzw. des Einschubkanals (5) geringer als die Breite (B2) der Chipkarte nach ISO 7816 ist und der Einschubkanal (5) über seine gesamteLänge in Einschubrichtung der Chipkate nach ISO 7816 zumindest einseitig durchgehend offen ist .

2. Kontaktiereinheit nach Anspruch 1, **dadurch gekennzeichnet,**
**dass** das Gehäuse eine Basisplatte (2) und eine Abdeckplatte (3) aufweist, zwischen denen der an einer Stirnseite des Gehäuses mündende schlitzartige Einschubkanal (5) für die Aufnahme der Chipkarte nach ISO 7816 ausgebildet ist, wobei die stirnseitige Breite (B1) der Basisplatte (2) des Gehäuses und/oder die stirnseitige Breite (B1) der Abdeckplatte (3) des Gehäuses geringer als die Breite (B2) der Chipkarte nach ISO 7816 ist.

3. Kontaktiereinheit nach Anspruch 1 oder 2, **dadurch gekennzeichnet, dass** der Einschubkanal (5) über seine gesamte Länge in Einschubrichtung der Chipkarte nach ISO 7816 beidseitig durchgehend offen ist.

4. Kontaktiereinheit nach Anspruch 2 oder 3, **dadurch gekennzeichnet, dass** die Basisplatte (2) und die Abdeckplatte (3) des Gehäuses ausschließlich im sich in Einschubrichtung der Chipkarte nach ISO 7816 in den Einschubkanal (5) anschließenden Bereich fest miteinander verbunden sind.

5. Kontaktiereinheit nach Anspruch 4, **dadurch gekennzeichnet, dass** die Verbindung von Basisplatte (2) und Abdeckplatte (3) des Gehäuses im sich in Einschubrichtung der Chipkarte nach ISO 7816 in den Einschubkanal (5) anschließenden Bereich zugleich eine Schwenkachse darstellt, bezüglich der die Basisplatte (2) und/oder die Abdeckplatte (3) des Gehäuses in einem geringen Maße relativ zueinander derart verschwenkbar sind, dass die Höhe des Einschubkanals (5) gegen die Wirkung einer Rückstellkraft veränderbar ist.

6. Kontaktiereinheit nach Anspruch 5, **dadurch gekennzeichnet, dass** sich die Höhe des Einschubkanals (5) mit zunehmendem Abstand von der Verbindung bei entfernter Chipkarte nach ISO 7816 verringert.

7. Kontaktiereinheit nach einem der Ansprüche 2 bis 6, **dadurch gekennzeichnet, dass** die Abdeckplatte (3) kürzer und/oder schmaler als die Basisplatte (2) ausgebildet ist.

8. Kontaktiereinheit nach einem der Ansprüche 2 bis 6, **dadurch gekennzeichnet, dass** die Basisplatte (2) und die Abdeckplatte (3) des Gehäuses deckungsgleich sind.

9. Kontaktiereinheit nach einem oder mehreren der Ansprüche 1 bis 6 und 8, **dadurch gekennzeichnet, dass** diese eine der PCMCIA-ExpressCard/34-Norm entsprechende stirnseitige Breite (B1) aufweist.

10. Kontaktiereinheit nach einem der Ansprüche 2 bis 9, **dadurch gekennzeichnet, dass** die Kontaktelemente (7) der Leiterplatte (6) in Richtung der Abdeckplatte (3) des Gehäuses weisen.

11. Kontaktiereinheit nach einem der Ansprüche 2 bis 10, **dadurch gekennzeichnet, dass** zumindest die Basisplatte (2) des Gehäuses einen lippenartigen Ansatz aufweist, durch welchen die Länge der Kontaktiereinheit (1) über das PCMCIA-ExpressCard-Format hinaus verlängert ist.

12. Kontaktiereinheit nach einem der Ansprüche 2 bis 11, **dadurch gekennzeichnet, dass** die Basisplatte (2) des Gehäuses und die Leiterplatte (6) eine Verlängerung aufweisen, welche sich bei Einsatz der Kontaktiereinheit (1) in einen dafür vorgesehenen Aufnahmeschacht (13) einer Kontaktiereinheiten (1) nutzenden Einrichtung (14) außerhalb des vorzugsweise im PCMCIA-ExpressCard-Format ausgebildeten Aufnahmeschachtes (13) befindet.

13. Kontaktiereinheit nach Anspruch 12, **dadurch gekennzeichnet, dass** in der Verlängerung elektronische Bauteile, vorzugsweise Sensorikelemente und/oder Antennen und/oder optische Anzeigeelemente, installiert sind.

## Claims

1. A contacting unit (1) for a chip card according to ISO 7816, with a housing, which has a connector panel (4) at an end face, a slot-like insertion channel (5) opening at the end face opposite the connector panel (4), into which insertion channel the chip card according to ISO 7816 can be pushed, and a printed circuit board (6) arranged in the housing parallel to the insertion channel (5) and electrically connected to the connector panel (4), which is equipped with contact elements (7) for contacting the card-shaped carrier element (11) on one surface,
**characterised**
**in that** the contacting unit is constructed in accordance with the PCMCIA-ExpressCard standard, wherein the end-face width (B1) of the housing or the insertion channel (5) is smaller than the width (B2) of the chip card according to ISO 7816 and the insertion channel (5) is continuously open at least on one side over the entire length thereof in the insertion direction of the chip card according to ISO 7816.

2. The contacting unit according to Claim 1, **characterised in that** the housing has a base plate (2) and a cover plate (3), between which the slot-like insertion channel (5) opening at an end face of the housing is constructed for accommodating the chip card according to ISO 7816, wherein the end-face width (B1) of the base plate (2) of the housing and/or the end-face width (B1) of the cover plate (3) of the housing is smaller than the width (B2) of the chip card according to ISO 7816.

3. The contacting unit according to Claim 1 or 2, **characterised in that** the insertion channel (5) is continuously open on both sides over the entire length thereof in the insertion direction of the chip card according to ISO 7816.

4. The contacting unit according to Claim 2 or 3, **characterised in that** the base plate (2) and the cover plate (3) of the housing are fixedly connected to one another exclusively in the region which is connected to the insertion channel (5) in the insertion direction of the chip card according to ISO 7816.

5. The contacting unit according to Claim 4, **characterised in that** the connection of base plate (2) and cover plate (3) of the housing in the region which is connected to the insertion channel (5) in the insertion direction of the chip card according to ISO 7816 at the same time constitutes a pivot axis with respect to which the base plate (2) and/or the cover plate (3) of the housing can be pivoted to a small extent relatively to one another in such a manner that the height of the insertion channel (5) can be changed against the action of a restoring force.

6. The contacting unit according to Claim 5, **characterised in that** the height of the insertion channel (5) is reduced with increasing distance from the connection in the case of the chip card according to ISO 7816 being removed.

7. The contacting unit according to one of Claims 2 to 6, **characterised in that** the cover plate (3) is shorter and/or narrower than the base plate (2).

8. The contacting unit according to one of Claims 2 to 6, **characterised in that** the base plate (2) and the cover plate (3) of the housing are congruent.

9. The contacting unit according to one or more of Claims 1 to 6 and 8, **characterised in that** the same has an end-face width (B1) corresponding to the PCMCIA-ExpressCard/34 standard.

10. The contacting unit according to one of Claims 2 to 9, **characterised in that** the contact elements (7) of the printed circuit board (6) point in the direction of the cover plate (3) of the housing.

11. The contacting unit according to one of Claims 2 to 10, **characterised in that** at least the base plate (2) of the housing has a lip-like extension, by means of which the length of the contacting element (1) is elongated beyond the PCMCIA-ExpressCard format.

12. The contacting unit according to one of Claims 2 to 11, **characterised in that** the base plate (2) of the housing and the printed circuit board (6) have an extension which, when using the contacting unit (1) in an accommodation shaft (13) of a device (14) using contacting units (1), is located outside of the accommodation shaft (13) preferably constructed in the PCMCIA-ExpressCard format.

13. The contacting unit according to Claim 12, **characterised in that** electronic components, preferably sensor elements and/or antennae and/or optical display elements are installed in the extension.

## Revendications

1. Unité de mise en contact (1) pour une carte à puce selon ISO 7816 comprenant un boîtier, qui présente sur une extrémité côté avant une zone de raccordement (4), un canal d'introduction (5) en forme de fente, débouchant sur l'extrémité côté avant, faisant face à la zone de raccordement (4), canal dans lequel la carte à puce selon ISO 7816 peut être introduite, et une plaque à circuits imprimés (6) disposée parallèlement au canal d'introduction (5) dans le boîtier et reliée électriquement à la zone de raccordement (4), laquelle plaque est équipée sur une surface d'éléments de contact (7) pour une mise en contact de l'élément support (11) en forme de carte,
**caractérisée en ce que**
l'unité de mise en contact est conçue selon la norme PCMCIA-ExpressCard, la largeur (B1) côté avant du boîtier et/ou du canal d'introduction (5) étant inférieure à la largeur (B2) de la carte à puce selon ISO 7816 et le canal d'introduction (5) étant ouvert de façon continue au moins sur un côté sur sa longueur totale dans le sens d'introduction de la carte à puce selon ISO 7816.

2. Unité de mise en contact selon la revendication 1, **caractérisée en ce que** le boîtier présente une plaque de base (2) et une plaque de recouvrement (3), entre lesquelles le canal d'introduction (5) en forme de fente, débouchant sur un côté avant du boîtier est conçu pour le logement de la carte à puce selon ISO 7816, la largeur (B1) côté avant de la plaque de base (2) du boîtier et/ou la largeur (B1) côté avant de la plaque de recouvrement (3) du boîtier étant plus faible que la largeur (B2) de la carte à puce selon ISO 7816.

3. Unité de mise en contact selon la revendication 1 ou 2, **caractérisée en ce que** le canal d'introduction (5) est ouvert de façon continue sur les deux côtés sur toute sa longueur dans le sens d'introduction de la carte à puce selon ISO 7816.

4. Unité de mise en contact selon la revendication 2 ou 3, **caractérisée en ce que** la plaque de base (2) et la plaque de recouvrement (3) du boîtier sont reliées l'une à l'autre fixement exclusivement dans la zone se raccordant dans le sens d'introduction de la carte à puce selon ISO 7816 dans le canal d'introduction (5).

5. Unité de mise en contact selon la revendication 4, **caractérisée en ce que** la liaison de la plaque de base (2) et de la plaque de recouvrement (3) du boîtier présente dans la zone, se raccordant dans le sens d'introduction de la carte à puce selon ISO 7816 dans le canal d'introduction (5), en même temps un axe de pivotement par rapport auquel la plaque de base (2) et/ou la plaque de recouvrement (3) du boîtier peuvent être basculées dans une faible proportion l'une par rapport à l'autre, de telle sorte que la hauteur du canal d'introduction (5) peut être modifiée par rapport à l'effet d'une force de rappel.

6. Unité de mise en contact selon la revendication 5, **caractérisée en ce que** la hauteur du canal d'introduction (5) se réduit avec l'augmentation de la distance à la liaison lorsque la carte à puce est enlevée selon ISO 7816.

7. Unité de mise en contact selon l'une des revendications 2 à 6, **caractérisée en ce que** la plaque de recouvrement (3) est plus courte et/ou plus étroite que la plaque de base (2).

8. Unité de mise en contact selon l'une des revendications 2 à 6, **caractérisée en ce que** la plaque de base (2) et la plaque de recouvrement (3) du boîtier coïncident.

9. Unité de mise en contact selon l'une ou plusieurs des revendications 1 à 6 et 8, **caractérisée en ce que** cette unité présente une largeur (B1) côté avant correspondant à la norme PCMCIA-ExpressCard/34.

10. Unité de mise en contact selon l'une des revendications 2 à 9, **caractérisée en ce que** les éléments de contact (7) de la plaque à circuits imprimés (6) sont dirigés dans le sens de la plaque de recouvrement (3) du boîtier.

11. Unité de mise en contact selon l'une des revendications 2 à 10, **caractérisée en ce qu'**au moins la plaque de base (2) du boîtier présente une embase en forme de lèvre, par laquelle la longueur de l'unité de mise en contact (1) est prolongée au-delà du format PCMCIA-ExpressCard.

12. Unité de mise en contact selon l'une des revendications 2 à 11, **caractérisée en ce que** la plaque de base (2) du boîtier et la plaque à circuits imprimés (6) présentent un prolongement qui, lorsqu'on insère l'unité de mise en contact (1) dans un puits de logement (13) prévu à cet effet d'un appareil (14) utilisant des unités de mise en contact (1), se trouve à l'extérieur du puits de logement (13) formé de préférence dans le format PCMCIA-ExpressCard.

13. Unité de mise en contact selon la revendication 12, **caractérisée en ce que** des composants électroniques, de préférence des éléments de détection et/ou des antennes et/ou des éléments d'affichage optiques, sont installés dans le prolongement.
